# EUROPÄISCHE PATENTANMELDUNG

(11) **EP 4 722 468 A1**
(43) Veröffentlichungstag der Anmeldung: **08.04.2026**
(21) Anmeldenummer: 24204901.3
(22) Anmeldetag: 07.10.2024
(51) Int. Cl.: E04F 13/08

(54) **VERFAHREN ZUR BEFESTIGUNG VON LASTTRAGENDEN BAUTEILEN AN UNEBENEN OBERFLÄCHEN**

(71) Anmelder: ecoworks GmbH, 10559 Berlin (DE)
(72) Erfinder: MORITZ, Karsten, 10559 Berlin (DE); HEISENBERG, Emanuel, 10559 Berlin (DE)
(74) Vertreter: Lorenz Seidler Gossel Part. mbB

(57) **Zusammenfassung**

Die Erfindung betrifft ein Verfahren zur Befestigung von lasttragenden Bauteilen an unebenen Oberflächen. Das erfindungsgemäße Verfahren ist für seine Anwendung im Bauwesen gedacht. Insbesondere ist das Verfahren auch für eine Anwendung in der seriellen Sanierung von Gebäuden geeignet. Mit dem Verfahren können vorgefertigte Bauteile, wie Konsolen, Balken oder Träger derart an schiefen und unebenen Wand- oder Deckenflächen befestigt werden, dass sie anschließend eine horizontale Aufstellfläche oder eine vertikale oder definiert geneigte Anstellfläche bieten, beispielsweise um Fassadenelemente an ihnen oder auf ihnen zu befestigen.

## Beschreibung

Die Erfindung betrifft ein Verfahren zur Befestigung von lasttragenden Bauteilen an unebenen Oberflächen, beispielsweise zur Befestigung einer Konsole oder eines Windankers an einem unebenen Wand- oder Deckenabschnitt eines Gebäudes.

Eine Ausführungsart der seriellen Gebäudesanierung beinhaltet die Anbringung von wärmedämmenden Fassadenelementen an Gebäuden. Die Anbringung der Fassadenelemente erfolgt zumeist durch die Befestigung von Konsolen, horizontalen oder vertikalen Schienen und Windankern an Außenwänden bestehender Gebäude. Ein solches Verfahren, in dem Fassadenelemente in Sandwichbauweise anhand von den zuvor genannten Befestigungselementen an Außenwänden bestehender Gebäude befestigt werden, ist in der EP 4 368 792 A2 offenbart.

Aufgrund des Gewichts der Fassadenelemente werden die Konsolen, die ihre Last an das Gebäude zumeist über Ankerstäbe weitergeben, häufig an Stirnseiten von Geschossdecken befestigt. Ist die Kontaktfläche der Konsole mit der Außenwand der Geschossdecke schief oder uneben, besteht jedoch die Gefahr, dass die Konsole schief oder nicht in der richtigen Höhe angebracht wird. Darüber hinaus kann der nicht maßhaltige Einbau von Konsolen an einer schiefen oder unebenen Wand zu Spannungskonzentrationen an Ankerstäben oder zu Spannungsüberschreitungen an Bauteilen oder auch zu Schiefstellungen von Bauteilen führen, die auf der Konsole aufliegen oder an ihr befestigt sind.

Um dies zu vermeiden und sicherzustellen, dass die Konsole in ihrem Endzustand lotrecht, eben und in der geplanten Höhe eingebaut ist, werden heute vorwiegend Maßnahmen auf der Baustelle getroffen. Zum Einsatz kommen beispielsweise Kammbleche, Futterbleche oder Unterlegkeile und -platten, oder es werden Quellmörtel, Betonspachtel oder andere tragfähige Ausgleichsmassen verwendet. Zudem gibt es verstellbare Konsolen, die eine Justierung in mindestens einer Richtung ermöglichen. Derartige Konsolen erfordern aber eine Justierung auf der Baustelle und die Herstellung und Handhabung ist insgesamt relativ aufwändig.

Es gibt bislang keine individualisiert vorgefertigte und ohne weitere Justierung einbaufertige Lösung, welche eine gerichtete Montagefläche an einer schiefen oder unebenen Wand oder Decke schafft, um die Rückseite einer Konsole oder dgl. an- oder aufzulegen und an der Wand bzw. Decke zu befestigen. Aufgabe der Erfindung ist es, eine derartige Lösung zu schaffen.

Vor diesem Hintergrund betrifft die Erfindung ein Verfahren zur Befestigung eines Bauteils an einer unebenen Oberfläche, wobei die Ausrichtung und Struktur der unebenen Oberfläche erfasst wird, um ein digitales Abbild der unebenen Oberfläche zu erstellen, wobei auf der Grundlage des digitalen Abbildes der unebenen Oberfläche im Rahmen eines additiven Fertigungsverfahrens ein Ausgleichselement hergestellt wird, das eine nach Ausrichtung und Struktur zur unebenen Oberfläche inverse Kontaktfläche sowie eine gerichtete Montagefläche aufweist, und wobei das Bauteil an der Montagefläche des Ausgleichselements befestigt wird. Unter dem Begriff der additiven Fertigung (auch 3D-Druck) werden Fertigungsverfahren zusammengefasst, bei denen Material Schicht für Schicht aufgetragen wird, um dreidimensionale Gegenstände (hier: das Ausgleichselement) zu erzeugen.

In einer Ausführungsform handelt es sich bei der unebenen Oberfläche um einen unebenen Wand- oder Deckenabschnitt eines Gebäudes. Insbesondere kann das Verfahren im Rahmen der seriellen Gebäudesanierung zum Einsatz kommen und der Befestigung von Konsolen an der Außenwand von Bestandsgebäuden dienen, wobei es sich bei den von den Konsolen gehaltenen Anbauelementen um wärmedämmende Fassadenelemente handeln kann.

In einer Ausführungsform handelt es sich bei dem Bauteil um eine Konsole zur tragenden Befestigung von Anbauelementen. In einer Variante kann es sich auch um einen Windanker zur Sicherung von Anbauelementen gegen Zugkräfte handeln. Das Bauteil kann aber auch ein beliebiges anderes Strukturbauteil sein, beispielsweise ein Balken oder Träger. Es kann aus Holz, Metall (z.B. Aluminium oder Stahl) oder einem anderen festen Material bestehen.

Vorzugsweise ist vorgesehen, dass alle Verfahrensschritte am selben Ort, insbesondere an einer Baustelle durchgeführt werden. Die additive Fertigung des Ausgleichselements kann also direkt an der Baustelle erfolgen. Dies steht im Gegensatz zu einer fabrikseitigen Vorfertigung eines Ausgleichselements, erlaubt eine direkte Fehlerkorrektur und führt insgesamt zu einer maßgeblichen Zeit- und Kostenersparnis durch den Wegfall von Transportwegen und -zeiten.

Das Ausgleichselement kann aus einem Polymerwerkstoff oder Polymer-Verbundwerkstoff gefertigt werden. Beispiele geeigneter Polymerwerkstoffe umfassen Polyamid (PA), Polyethylen (PE), thermoplastisches Polyurethan (TPU), Polyethylenterephtalat mit Glykol (PETG), Acrylester-Styrol-Acrylnitril (ASA) oder Polylactid (PLA). Beispiele geeigneter Polymer-Verbundwerkstoffe umfassen Holz-Kunststoff-Verbundwerkstoff (WPC) oder Glas- oder Karbonfaser-verstärkte Kunststoffe. Die Basiskunststoffe können aus der oben genannten Gruppe ausgewählt sein.

Die Erfassung der Ausrichtung und Struktur der unebenen Oberfläche und Erstellung des digitalen Abbildes kann unter Verwendung eines 3D-Laserscanners erfolgen. Alternativ oder zusätzlich kann ein mechanisches Abtastgerät, insbesondere in Form einer Konturenlehre (engl. Contour Gauge) mit linear oder insbesondere flächig angeordneten digitalen Sensoren, etwa digitalen Abstands- und Neigungssensoren zum Einsatz kommen. Bei den digitalen Abstandssensoren kann es sich beispielsweise um lineare Potentiometer handeln. Die Konturenlehre kann eine Vielzahl parallel angeordneter linearer Potentiometer und digitale Neigungssensoren (eine digitale Wasserwaage) umfassen. Die Potentiometer können in einer Reihe, also für eine lineare Abtastung, oder in mehreren Reihen, also für eine flächige Abtastung angeordnet sein.

In einer Ausführungsform ist die Montagefläche des Ausgleichselements flach bzw. eben. In einer anderen Ausführungsform ist die Montagefläche des Ausgleichselements mit einer vorzugsweise regelmäßigen Struktur versehen. Eine derartige Struktur kann beispielsweise in Form einer gewellten, gekerbten oder gezackten Oberfläche vorliegen. Die korrespondierende Montagefläche des Bauteils sollte dann korrespondierend entweder eben sein oder eine korrespondierende Struktur aufweisen.

Vorzugsweise wird das Ausgleichselement im Rahmen der additiven Fertigung mit Bohrungen gefertigt oder nachträglich mit Bohrungen versehen. Die Bohrungen stehen vorzugsweise senkrecht zur Montagefläche. Die Bohrungen können der Aufnahme von Ankerstäben dienen, mit denen das Bauteil an der Oberfläche befestigt werden kann. Die Ankerstäbe können z.B. als Injektionsanker in der unebenen Oberfläche z.B. einer Gebäudewand oder der Stirnseite einer Decke oder Zwischendecke versenkt sein und lotrecht (in Relation auf die Kontaktfläche) daraus hervorstehen.

In einer Ausführungsform ist das Ausgleichselement zusätzlich mit einer Auflagekontur versehen. Die Auflagekontur wird vorzugsweise im Rahmen der additiven Fertigung gebildet und stellt in diesen Fällen einen integralen Teil des Ausgleichselements dar. Ein Beispiel für eine geeignete Auflagekontur umfasst eine Leistenkontur an einer Seite der Kontaktfläche.

Das erfindungsgemäße Befestigungsverfahren ist für seine Anwendung im Bauwesen gedacht. Insbesondere ist das Verfahren auch für seine Anwendung in der seriellen Sanierung von Gebäuden geeignet. Mit dem Verfahren können vorgefertigte Bauteile, wie z.B. Konsolen, derart an schiefen und unebenen Wand- oder Deckenflächen befestigt werden, dass sie anschließend eine horizontale Aufstellfläche oder eine vertikale oder definiert geneigte Anstellfläche bieten, beispielsweise um Fassadenelemente an ihnen oder auf ihnen zu befestigen.

Die Erfindung betrifft weiterhin ein Verfahren zur energetischen Gebäudesanierung, wobei die Außenwand eines Bestandsgebäudes wenigstens abschnittsweise mit wärmedämmenden Fassadenelementen überdeckt wird, wobei die Fassadenelemente vor die Außenwand gesetzt und an Bauteilen, z.B. Konsolen, montiert werden, die in der Außenwand verankert sind. Erfindungsgemäß wird wenigstens ein Teil der Bauteile im Rahmen eines wie oben geschilderten Verfahrens an der Außenwand befestigt.

Weitere Einzelheiten und Vorteile der Erfindung ergeben sich aus den nachfolgend beschriebenen Figuren und Ausführungsbeispielen. In den Figuren zeigen:
- Fig. 1:: einen Abschnitt einer Außenwand eines Gebäudes sowie eines Ausgleichselements und einer Konsole in perspektivischer Explosionsansicht, zur schematischen Darstellung eines erfindungsgemäßen Verfahrens;
- Fig. 2:: die Erstellung eines digitalen Abbildes eines unebenen Wandabschnittes unter Verwendung eines 3D-Laserscanners;
- Fig. 3:: die Erstellung eines digitalen Abbildes eines unebenen Wandabschnittes unter Verwendung einer Konturenlehre mit digitalen Sensoren;
- Fig. 4:: eine Verfahrensvariante, in der das Ausgleichselement eine strukturierte Montagefläche aufweist;
- Fig. 5:: eine Verfahrensvariante, in der das Ausgleichselement eine zusätzliche Auflagekontur an der Montagefläche aufweist;
- Fig. 6:: eine Verfahrensvariante, in der das Bauteil als Balken ausgebildet ist;
- Fig. 7:: eine Verfahrensvariante, in der das Ausgleichselement mehrere Kontaktflächen aufweist; und
- Fig. 8:: eine Verfahrensvariante, in der das Ausgleichselement balkenförmig ist.

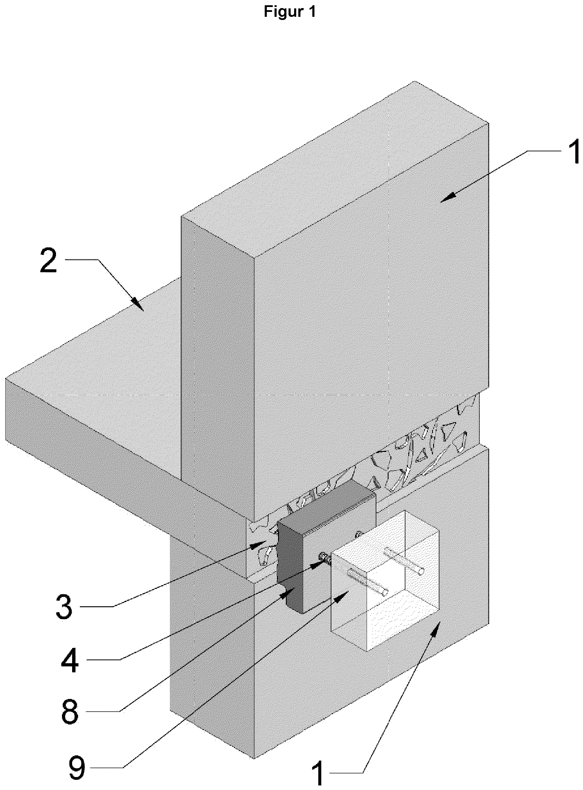

In Fig. 1 wird ein Abschnitt einer Außenwand (1) eines Gebäudes auf Höhe einer Zwischendecke (2) dargestellt. Der Bereich der Zwischendecke (2) wird in der seriellen Gebäudesanierung aus statischen Gründen bevorzugt für die Befestigung von Konsolen (9) verwendet. Die Oberfläche (3) der Außenwand (1), an der eine Konsole (9) wie gezeigt z.B. lotrecht befestigt werden soll, und die z.B. wie in der Figur dargestellt der Stirnseite der Zwischendecke (2) entsprechen kann, ist aber häufig uneben, was eine Befestigung der Konsole (9) erschwert und zu einer starken Biegebeanspruchung von Ankerstäben (4) und/oder zu einer Schiefstellung der Konsole (9) führen kann. Im Stand der Technik stehen bisher keine zufriedenstellenden Lösungen für dieses Problem zur Verfügung, wie eingangs geschildert.

Die hier vorgestellte Erfindung schlägt die additive Fertigung von individuell angepassten Ausgleichselementen (8) vor. Sie haben eine nach Ausrichtung und Struktur zur unebenen Oberfläche (3) inverse Kontaktfläche sowie eine gerichtete Montagefläche, an der die Konsole (9) befestigt werden kann.

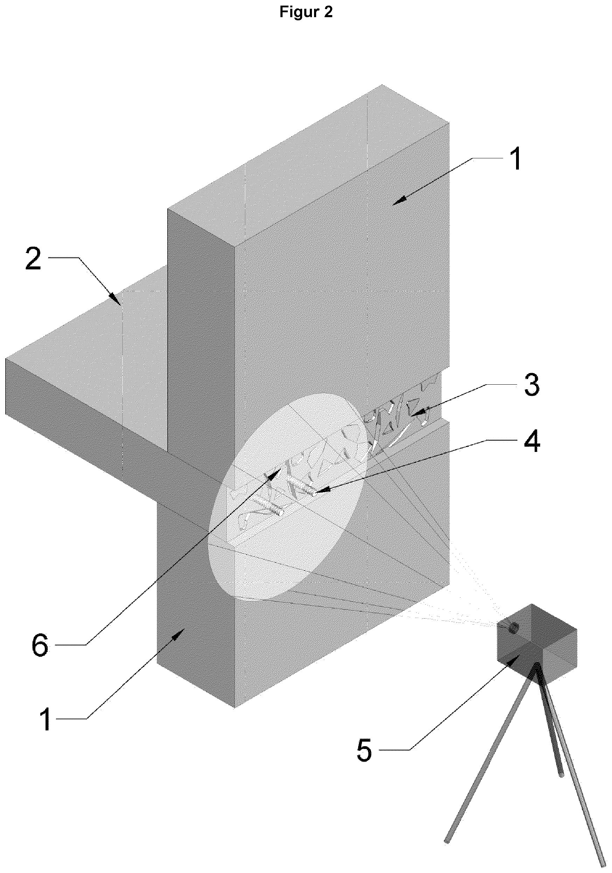

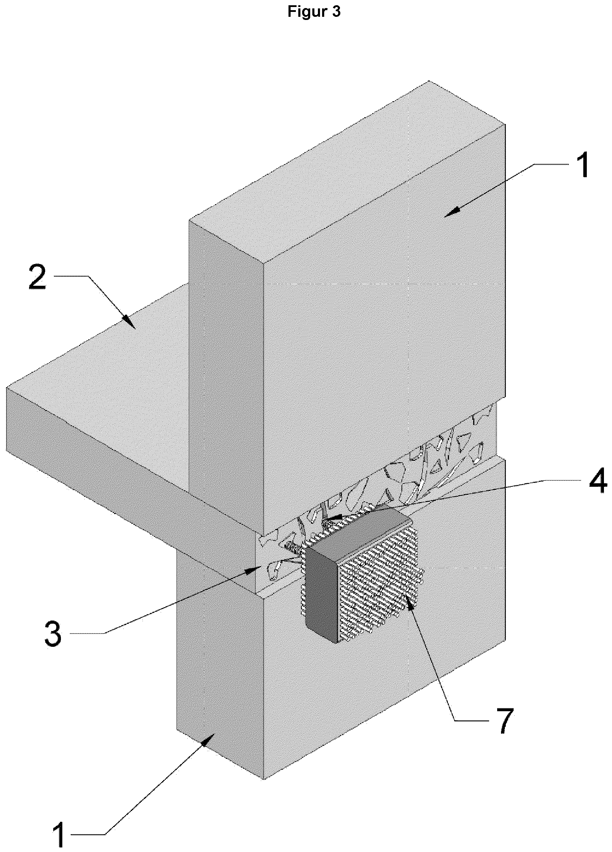

Das für die additive Fertigung erforderliche Aufmaß, also die Erfassung der Ausrichtung und Struktur (6) der unebenen Oberfläche (3) und Erstellung deren digitalen Abbildes, kann, wie in Fig. 2-3 dargestellt, anhand eines 3D-Laserscanners (5) oder anhand einer Konturenlehre (7) mit digitalen Sensoren, insbesondere einer Vielzahl parallel angeordneter linearer Potentiometer und digitaler Neigungssensoren erfolgen. Diese Geräte ermöglichen, dass die geometrischen Daten von Form und Ausrichtung der relevanten Oberfläche (3) in digitaler Form vorliegen und über eine Datenschnittstelle auf einen 3D-Drucker gesendet werden können. Mit dem so erzeugten digitalen Abbild der Oberfläche (3) und ggf. auch der Ankerstäbe (4) erstellt der 3D-Drucker ein passendes Ausgleichselement (8), welches genau auf die unebene Oberfläche (3) passt und welches bereits Löcher mit dem gewünschten Lochspiel für Ankerstäbe (4) enthalten kann.

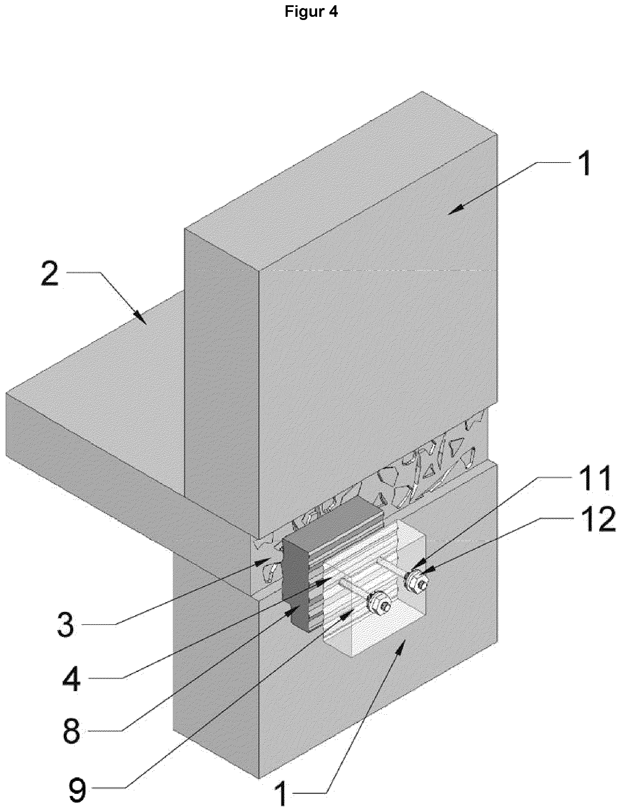

In einer Variante des Verfahrens, wie dargestellt in Fig. 4, sind die Montagefläche des Ausgleichselements (8) und die Montagefläche der Konsole (9) korrespondierend strukturiert, hier in Form einer waagerechten Wellung dargestellt. Dies verbessert die Querkraftübertragung an der Kontaktfläche der Konsole (9) und des Ausgleichselements (8) und reduziert die Biegebeanspruchung des Ankerstabs (4). Der Ankerstab (4) verbindet die Konsole (9) und das Ausgleichselement (8) mit der Außenwand (1) oder der Zwischendecke (2), je nachdem an welcher Stelle die Bohrung für den Ankerstab (4) gesetzt wurde. Er kann axial anhand von Dübeln (11) und Muttern (12) festgezogen werden.

Der Ankerstab (4) wird häufig mit einer Injektionsmasse kombiniert, um ihn im Bohrloch in der Wand (1) oder Decke (2) zu befestigen. Ein aus diesen Komponenten bestehendes System wird häufig als Injektionsanker bezeichnet. Der Ankerstab (4) kann statt mit Injektionsmasse auch mit einem Metall- oder Kunststoffdübel kombiniert werden, um ihn in Beton oder Mauerwerk zu befestigen. Auch können die zuvor genannten Varianten durch eine Betonschraube ersetzt werden. Alle zuvor genannten Varianten werden häufig als Ankersystem oder Verankerung bezeichnet.

Die Konsole (9) kann beispielsweise aus Stahl, Aluminium, Holz oder Kunststoffen hergestellt sein. Konsolen (9) aus Holz können, wie zuvor beschrieben, mit gezahnten Scheibendübeln kombiniert werden, damit Kräfte nicht über Lochlaibung im Holz der Konsolen (9), sondern über den Scheibendübel, aus z.B. Stahl, von der Konsole (9) und auch dem Ausgleichselement (8) in den Ankerstab (4) übertragen werden.

Die additive Fertigung des Ausgleichselements (8) erfolgt vorzugsweise direkt an der Baustelle, um Wege und Zeiten einzusparen und erforderlichenfalls eine unmittelbare Fehlerkorrektur zu ermöglichen. Die additive Fertigung ist für die individualisierte Erstellung der Ausgleichselemente (8) mit exakt der benötigten Struktur der Kontaktfläche ideal. Beispiele umfassen Binder Jetting, Laserschweißen oder Multi-Jet Modelling.

Das Ausgleichselement (8) kann aus einem Polymerwerkstoff oder Polymer-Verbundwerkstoff gefertigt werden. Da das Ausgleichselement (8) im zuvor beschriebenen Anwendungsfall der seriellen Sanierung von Fassadenelementen überdeckt wird, sind weder eine mangelnde Farbauswahl noch eine UV-Empfindlichkeit bei der Auswahl des geeigneten Werkstoffs für den 3D-Druck relevant. Bei anderen Anwendungen könnten auch diese Aspekte wichtige Kriterien bei der Auswahl sein.

Die Bohrungen für die Aufnahme der Ankerstäbe (4) können im Rahmen der additiven Fertigung oder nachträglich in das Ausgleichselement (8) eingearbeitet werden. Enthalten Ausgleichselemente (8) und Konsolen (9) bereits passende Löcher, die je nach Anforderungen mit oder ohne Lochspiel ausgeführt sind, können sie leicht auf Ankerstäbe (4) aufgeschoben werden, bis das Ausgleichselement (8) Kontakt mit Wand (1) und/oder Decke (3) hat, so dass die Konsole (9) weder wackelt noch schief steht. Zur Ausrichtung der Konsole (9) auf dem Ankerstab (4) haben Bohrungen häufig ein Lochspiel. Bei großen Abweichungen der Ankerstäbe (4) von ihren Soll-Lagen, beispielsweise bei Höhendifferenzen benachbarter Ankerstäbe (4) oder auch im Fall von Schiefstellungen, können Konsolen (9) auch mit Langlöchern versehen sein.

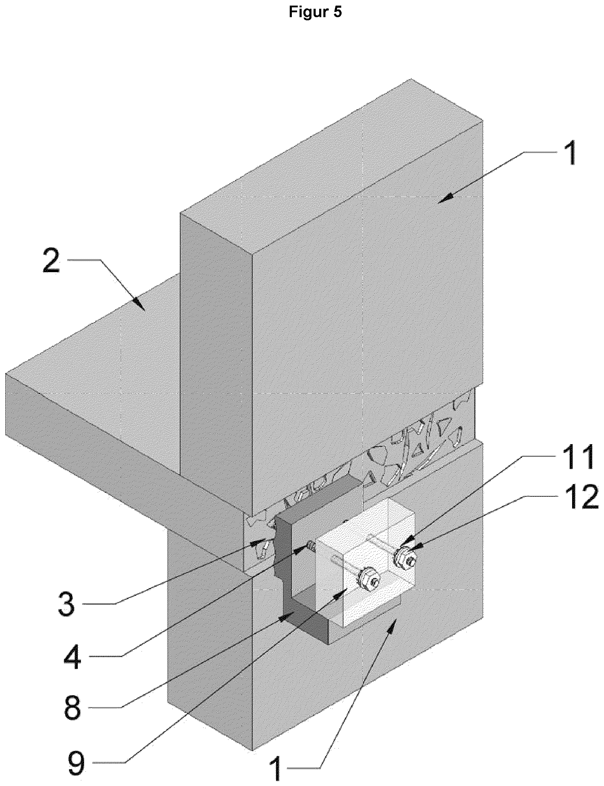

In einer anderen Variante des Verfahrens, wie dargestellt in Fig. 5, übernimmt diese Funktion eine die Kontaktfläche des Ausgleichselements (8) unten begrenzende Leistenkontur.

Das Ausgleichselement (8) kann nicht nur eine, sondern mehrere Kontaktflächen aufweisen.

Das erfindungsgemäße Verfahren ermöglicht zudem, auf Konsolen zu verzichten, indem deren lasttragende Funktion von Ausgleichselementen (8) übernommen wird. Die Ausgleichselemente (8) können in dem Fall beispielsweise die Last eines auf ihnen liegenden oder mit ihnen verbundenen Balkens (10) mittels Ankerstäben (4) in die Wand oder Decke übertragen. Die Verbindung von Balken (10) und Ausgleichselement (8) kann mithilfe geeigneter Verbinder und Verbindungsmittel, beispielsweise Schrauben, erfolgen.

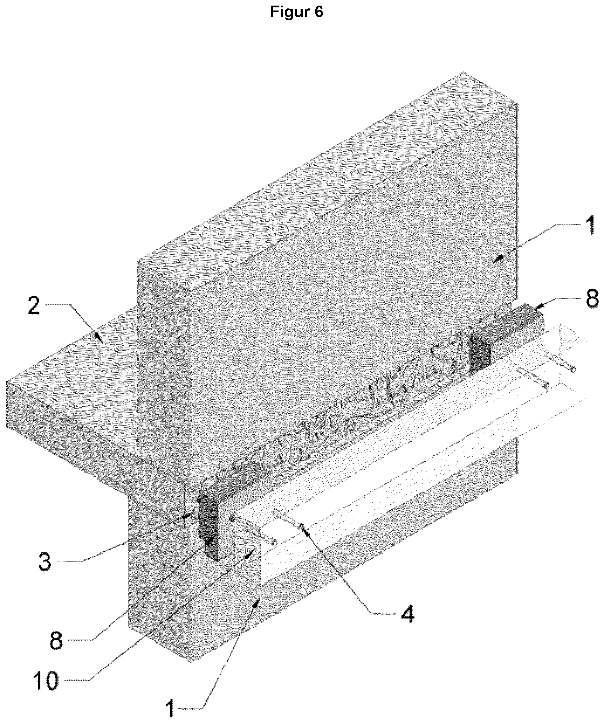

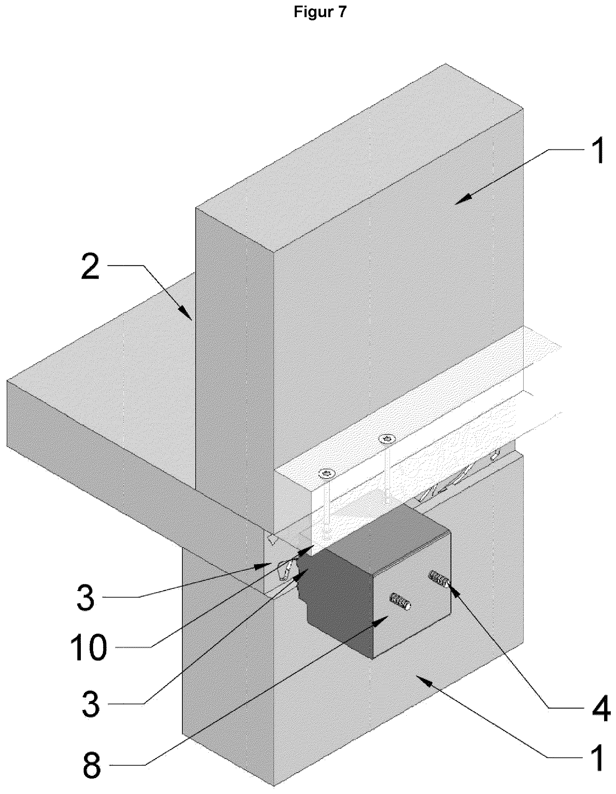

Sowohl Fig. 6 als auch Fig. 7 zeigen Varianten, bei denen auf die Konsole verzichtet wird und das Ausgleichselement (8) die Funktion der Konsole übernimmt. Fig. 6 zeigt dabei beispielhaft eine vertikale Montagefläche des Ausgleichselements (8) mit angelegtem Balken (10). Fig. 7 zeigt eine horizontale Montagefläche des Ausgleichselements (8) mit aufgesetztem Balken (10), der in diesem Fall keinen Kontakt zum Ankerstab (4) hat und mit Schrauben oder anderen Verbindern oder Verbindungsmitteln in seiner Lage am Ausgleichselement (8) gesichert wird.

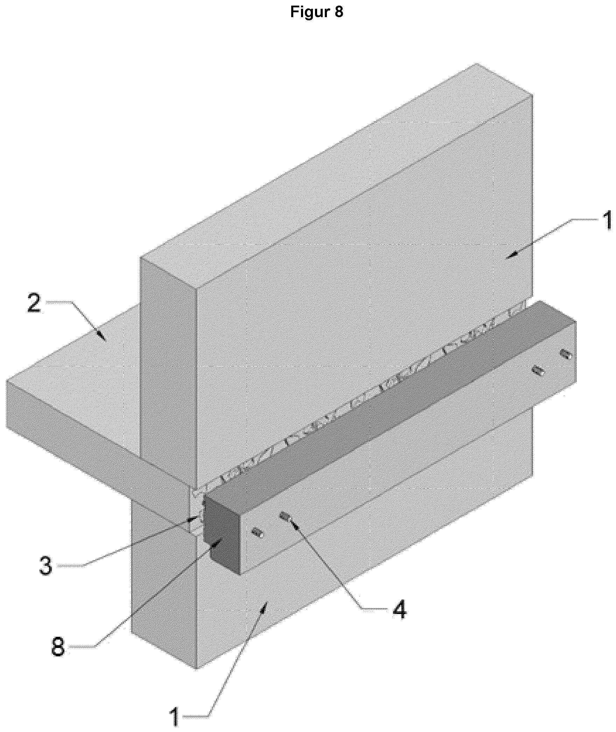

Auch kann das Ausgleichselement (8) selbst länglich ausgeführt sein und die Form eines Balkens oder Trägers annehmen, wie in Fig. 8 dargestellt ist.

Anhand von Balken (10) können Lasten aus Fassadenelementen gleichmäßig auf mehrere Konsolen verteilt werden. In Kombination mit nicht brennbaren Baustoffen kann der Balken (10) oder Träger zudem als horizontale oder vertikale Schwel- oder Brandsperre ausgeführt werden.

Die Erfindung liefert ein einfaches Verfahren der seriellen Vorfertigung, um die eingangs genannten Probleme zu lösen, Transport- und/oder Bauzeiten zu reduzieren und anhand eines reduzierten Arbeitsaufkommens an der Baustelle auch unnötige Staub- und Lärmbelastungen zu vermeiden. Durch die Erfindung werden Abhängigkeiten von Arbeitern, von pünktlicher Materialbereitstellung sowie von geeigneten Wetterbedingungen auf der Baustelle verringert oder sogar ganz vermieden.

## Patentansprüche

1. Verfahren zur Befestigung eines Bauteils an einer unebenen Oberfläche (3), wobei
die Ausrichtung und Struktur (6) der unebenen Oberfläche (3) erfasst wird, um ein digitales Abbild der unebenen Oberfläche (3) zu erstellen;
auf der Grundlage des digitalen Abbildes der unebenen Oberfläche (3) im Rahmen eines additiven Fertigungsverfahrens ein Ausgleichselement (8) hergestellt wird, das eine nach Ausrichtung und Struktur zur unebenen Oberfläche (3) inverse Kontaktfläche sowie eine gerichtete Montagefläche aufweist; und
das Bauteil an der Montagefläche des Ausgleichselements (8) befestigt wird.

2. Verfahren nach Anspruch 1, **dadurch gekennzeichnet, dass** es sich bei dem Bauteil um eine Konsole (9) zur tragenden Befestigung von Anbauelementen handelt und/oder dass es sich bei der unebenen Oberfläche (3) um einen unebenen Wand- oder Deckenabschnitt eines Gebäudes handelt.

3. Verfahren nach einem der vorhergehenden Ansprüche, **dadurch gekennzeichnet, dass** alle Verfahrensschritte am selben Ort, insbesondere an einer Baustelle durchgeführt werden.

4. Verfahren nach einem der vorhergehenden Ansprüche, **dadurch gekennzeichnet, dass** das Ausgleichselement (8) aus einem Polymerwerkstoff gefertigt wird, vorzugsweise aus einem Polymerwerkstoff der Gruppe Polyamid (PA), Polyethylen (PE), thermoplastisches Polyurethan (TPU), Polyethylenterephtalat mit Glykol (PETG), Acrylester-Styrol-Acrylnitril (ASA), Polylactid (PLA), oder einem Polymer-Verbundwerkstoff, vorzugsweise aus der Gruppe Holz-Kunststoff-Verbundwerkstoff (WPC), oder Glas- oder Karbonfaser-verstärkten Kunststoffen.

5. Verfahren nach einem der vorhergehenden Ansprüche, **dadurch gekennzeichnet, dass** die Erfassung der Ausrichtung und Struktur (6) der unebenen Oberfläche (3) und Erstellung des digitalen Abbildes unter Verwendung eines 3D-Laserscanners (5) erfolgt.

6. Verfahren nach einem der vorhergehenden Ansprüche, **dadurch gekennzeichnet, dass** die Erfassung der Ausrichtung und Struktur (6) der unebenen Oberfläche (3) und Erstellung des digitalen Abbildes unter Verwendung eines mechanischen Abtastgeräts, vorzugsweise einer Konturenlehre (7) mit digitalen Sensoren, insbesondere digitalen Abstands- und Neigungssensoren umfasst.

7. Verfahren nach einem der vorhergehenden Ansprüche, **dadurch gekennzeichnet, dass** die Montagefläche des Ausgleichselements (8) eben ist oder eine regelmäßige Struktur aufweist.

8. Verfahren nach einem der vorhergehenden Ansprüche, **dadurch gekennzeichnet, dass** das Ausgleichselement (8) im Rahmen der additiven Fertigung mit Bohrungen gefertigt oder nachträglich mit Bohrungen versehen wird, wobei die Bohrungen vorzugsweise senkrecht zur Montagefläche stehen.

9. Verfahren nach einem der vorhergehenden Ansprüche, **dadurch gekennzeichnet, dass** das Ausgleichselement (8) zusätzlich mit einer Auflagekontur versehen ist.

10. Verfahren zur energetischen Gebäudesanierung, wobei die Außenwand (1) eines Bestandsgebäudes wenigstens abschnittsweise mit wärmedämmenden Fassadenelementen überdeckt wird, wobei die Fassadenelemente vor die Außenwand (1) gesetzt und an Bauteilen montiert werden, die in der Außenwand (1) verankert sind, wobei wenigstens ein Teil der Bauteile im Rahmen eines Verfahrens nach einem der vorhergehenden Ansprüche an der Außenwand (1) befestigt wird.
